# EUROPEAN PATENT SPECIFICATION

(11) **EP 0 456 211 B1**
(45) Date of publication and mention of the grant of the patent: **28.02.1996**
(21) Application number: 91107482.1
(22) Date of filing: 08.05.1991
(51) Int. Cl.: H01B 1/12

(54) **Process for producing a composite comprising paper and electroconducting polymers**
Verfahren zur Herstellung eines Verbundstoffes bestehend aus Papier und elektroleitfähigen Polymeren
Procédé de fabriquer un composite comportant du papier et des polymères électroconducteurs

(30) Priority: 10.05.1990 JP 118778/90; 07.02.1991 JP 36570/91
(43) Date of publication of application: 13.11.1991
(60) Divisional application: 95101495.0
(73) Proprietor: TOMOEGAWA PAPER CO. LTD., Chuo-ku, Tokyo 104 (JP); YOSHINO, KATSUMI, Kishiwada-shi Osaka-fu (JP)
(72) Inventor: Oka, Osamu, c/o Tomoegawa Paper Co., Ltd., Shizuoka-shi, Shizuoka (JP); Yoshino, Katsumi, Kishiwada-shi Osaka (JP)
(74) Representative: Hansen, Bernd, Dr. Dipl.-Chem.

(56) References cited:
- EP-A- 0 206 133
- EP-A- 0 206 414
- EP-A- 0 352 882
- JOURNAL OF ELECTRONIC MATERIALS vol. 13, no. 1, January 1984, p. 211-230; R:B:BJöRKLUND, I.LUNDSTRöM: 'Some properties of polypyrrole- paper composites'

## Description

### FIELD OF THE INVENTION

The present invention relates to a process for producing a composite comprising a paper and an electroconducting polymer having a grown conjugated system at the main chain thereof and a process for producing the same. More specifically, the invention relates to a process for producing a composite comprising a paper and a conjugated electroconducting polymer having improved fabrication and stability without impairing inherent characteristics of the conjugated electroconducting polymer.

### BACKGROUND OF THE INVENTION

An electroconducting polymer having a highly grown conjugated system at the main chain thereof causes insulator-metal transition by doping with a dopant which is an electron donor or an electron acceptor, whereby the conductivity thereof can be desirably controlled. Furthermore, with the transition, optical and magnetic properties of the compound are largely changed. Accordingly, such an electroconducting polymer has been widely noticed as a functional material capable of making various functional applications by utilizing the above-described properties.

Recently, with the development of various kinds of electroconducting polymers, utilization of the conjugated electroconducting polymer to electrodes for batteries, electrochemical sensors, electrochromic devices, etc., has been highly expected.

Since conventional conjugated electroconducting polymers are generally insoluble in almost all of solvents and are not melted even by heating, the polymers had a large disadvantage of poor fabrication. Recently, electroconducting polymers soluble in solvents and fusible electroconducting polymers capable of undergoing melt molding by heating have been developed. However, it is the present status that these conjugated electroconducting polymers have not yet had sufficient fabrication, or if these polymers are given sufficient fabrication, the inherent characteristics of these compounds are impaired.

Also, when a conjugated compound is subjected to electropolymerization, a conjugated electroconducting polymer may be obtained in a film form. However, in almost all cases, conjugated electroconducting polymers keeping a film form cannot be obtained, and these compounds have a fault that they form a thin layer or deposit as a powder on an electrode.

Also, when a precursor polymer of a conjugated electroconducting polymer is cast and heat treated, a conjugated electroconducting polymer may be obtained in a film form. However, in almost all cases, it was impossible to obtain a film having sufficient flexibility. Furthermore, it has been attempted to form composites with general-purpose polymer films by utilizing electropolymerization or chemical polymerization, but there is a limitation on obtainable composites.

EP-A-0 206 414 reveals a process for producing a composite containing a paper and polypyrrole, wherein pyrrole is subjected to oxidation polymerization in the presence of a paper. The same teaching is also revealed by Journal of Electronic Materials, Vol. 13, No. 1, pp. 211-230.

EP-A-0 352 882 discloses a process for the production of electroconductive fabrics, according to which a fabric material is impregnated with an agent comprising an aniline monomer and an oxidizing agent, resulting in a prepolymer deposited on the surface of the fabric polymer which is then polymerized by oxidation.

### SUMMARY OF THE INVENTION

As a result of various investigations for solving the above-described problems, the present inventors have discovered a process of producing a composite composed of a paper and a conjugated electroconducting polymer having improved fabrication and stability without impairing inherent characteristics of the conjugated electroconducting polymer.

That is, an object of the present invention is to provide a process for producing a composite comprising a paper and a conjugated electroconducting polymer having improved fabrication and stability without impairing inherent characteristics of the conjugated electroconducting polymer.

Thus, the invention provides a process for producing a composite comprising a paper and a conjugated electroconducting polymer, the conjugated electroconducting polymer existing between or in close contact with fibers of the paper, which comprises subjecting a conjugated compound to electropolymerization in the presence of a paper.

### DETAILED DESCRIPTION OF THE INVENTION

As to the paper for use in this invention, there is no particular restriction if the paper can sufficiently endure under the circumstances of the polymerization of the conjugated compound, or the circumstances of being impregnated with a solution of the soluble precursor polymer and of the heat treatment, and using the composite. For example, uncoated papers for printing, original papers for thermal recording papers, original papers for copying papers, packaging papers, electrical insulating papers, and synthetic papers such as synthetic fiber papers and plastic foam papers can be used. Also, cloths, nonwoven fabrics, etc., can be used.

As the conjugated compound for obtaining the conjugated electroconducting polymer for use in this invention, for example, the following compounds can be used.

### (1) Benzene and derivatives thereof:

Benzene and substituted benzenes having no more than 4 substituent groups can be used. Specific examples include aniline, phenol, thiophenol, toluene, anisole, aminothiophenol, o- and m-toluenesulfonic acids, and substituted compounds thereof. Examples of the substituent group for the substituted compounds include a straight chain alkyl group (such as methyl, ethyl, propyl, butyl, pentyl, hexyl, heptyl, octyl, nonyl, decyl, undecyl, dodecyl, hexadecyl), a cyclic alkyl group (such as cyclohexyl, cyclopentyl), a branched alkyl group (such as isopropyl, t-butyl), an alkoxy group (such as methoxy, ethoxy, propoxy), an alkynyl group, an amino group, an aryl group, an allyl group, a carboxyl group, a nitro group, a halogen atom, a cyano group, and a sulfonic acid group. A part of the hydrogens of the alkyl group may be substituted by an alkoxy group, an alkenyl group, an amino group, an aryl group, an allyl group, a carboxyl group, a nitro group, a halogen atom, a cyano group, a sulfonic acid group, etc.

### (2) Condensed polycyclic compounds and derivatives thereof:

Specific examples include naphthalene, fluorene, anthracene, phenanthrene, pyrene, coronene, and substituted compounds thereof. Specific examples of the substituted compounds include α- and β-aminonaphthalenes, aminoanthracene, aminocoronene, alkylfluorenes, and substituted compounds thereof.

These substituted compounds may have the substituent group as described in (1) above.

### (3) Heterocyclic aromatic compounds and derivatives thereof:

Specific examples include pyrrole, furan, thiophene, selenophene, carbazole, pyridine, oxazole, thiazole, and substituted compounds thereof.

Specific examples of the substituted compounds include 3-alkylpyrroles, N-alkylpyrroles, 3,4-dialkylpyrroles, 3-alkylfurans, 3,4-dialkylfurans, 3-alkylthiophenes, 3,4-dialkylthiophenes, 3-alkylselenophenes, 3,4-dialkylselenophenes, and substituted compounds thereof.

These substituted compounds may have the substituent group as described in (1) above.

The electropolymerization is carried out by bring a paper in close contact with an electrode or attaching a metal to a paper by vapor deposition, plating, etc. to form a working electrode, placing the paper in a solution of the conjugated compound, and undergoing electropolymerization under a condition of constant potential, constant current, constant voltage, etc.

As a solvent for dissolving the conjugated compound, water, an organic solvent, or a mixture thereof can be used. As the electrode, a noble metal electrode (such as those made of gold, platinum, etc.), a nickel electrode, a chromium electrode, a carbon electrode, and a glass electrode having vapor deposited thereon indium(II) oxide, stannic oxide, etc. are preferably used, but the invention is not limited to these kinds of electrode materials and forming method of working electrodes and counter electrodes.

The composite comprising a paper and a conjugated electroconducting polymer obtained by the process of this invention can be applied for use of wide ranges such as, for example, electrodes for primary and secondary batteries, packing papers having an antistatic function, electromagnetic shielding materials, etc., by properly selecting the form and shape of paper as a substrate. Furthermore, even a conventional conjugated electroconducting polymer which is obtained only as a powder or a conventional conjugated electroconducting high molecular weight compound which scarcely grows on an electrode can be used in the present invention while utilizing the characteristics thereof.

### EXAMPLE 1

An electrical insulating paper having a thickness of 30 µm was vapor deposited with gold, and after connecting a leading wire thereto, the vapor deposited portion was fixedly covered with an epoxy resin to electrically insulate the portion. An electrode thus prepared was immersed in an electrolyte having an aniline concentration of 0.1 mole/liter and a hydrochloric acid concentration of 0.2 mole/liter, and electropolymerization was carried out by using a platinum plate as a counter electrode at a constant voltage of 1.5 volts and at a quantity of electricity of 3 coulombs. Thus, polyaniline deposited on the substantially entire surface of the paper. When the composite was used as a positive electrode as it was and the charging and discharging characteristics thereof were measured in a propylene carbonate solution of 0.1 mole/liter of lithium perchlorate, the coulomb efficiency was 98%, which showed excellent electric conducting property.

### EXAMPLE 2

A paper for printing having a thickness of 60 µm was vapor deposited with gold, and after connecting a leading wire thereto, the vapor deposited portion was fixedly covered with an epoxy resin to electrically insulate the portion. An electrode thus prepared was immersed in an electrolyte having an aniline concentration of 0.1 mole/liter and a hydrochloric acid concentration of 0.2 mole/liter, and electropolymerization was carried out by using a platinum plate as a counter electrode at a constant voltage of 1.5 volts and at a quantity of electricity of 3 coulombs. Thus, polyaniline grew in the inside of the paper. The coulomb efficiency of the composite was 96% as in Example 1, which showed excellent electric conducting property.

### EXAMPLE 3

An electrical insulating paper having a thickness of 30 µm was immersed in an electrolyte having an aniline concentration of 0.1 mole/liter and a hydrochloric acid concentration of 0.2 mole/liter, and after sandwiching the paper between two platinum plates, electropolymerization was carried out at a constant voltage of 1.5 volts and at a quantity of electricity of 3 coulombs. Thus, polyaniline deposited on the substantially entire surface of the paper to provide a green composite in a doped state. The coulomb efficiency of the composite was 95% as in Example 1, and the electric conductivity thereof was 0.1 S/cm in a dry state.

### EXAMPLE 4

An electrical insulating paper having a thickness of 30 µm was vapor deposited with gold, and after connecting thereto a leading wire, the vapor deposited portion was fixedly covered with a epoxy resin to electrically insulate the portion. An electrode thus prepared was immersed in an electrolyte having a 3-anilinopropionitrile concentration of 0.1 mole/liter and a hydrochloric acid concentration of 0.2 mole/liter, and electropolymerization was carried out by using a platinum plate as a counter electrode at a constant voltage of 1.5 volts and at a quantity of electricity of 1 coulomb. Thus, the polymer grew in the inside of the paper. The coulomb efficiency of the composite was 95% as in Example 1, which showed excellent electric conducting property.

### EXAMPLE 5

An electrical insulating paper having a thickness of 30 µm was vapor deposited with gold, and after connecting thereto a leading wire, the vapor deposited portion was fixedly covered with an epoxy resin to electrically insulate the portion. An electrode thus prepared was immersed in a propylene carbonate solution containing 2 mmole of thiophene and 1 mmole of tetraethylammonium tetrafluoroborate, and electropolymerization was carried out in an argon atmosphere by using a nesa glass as a counter electrode at a constant voltage of 10 volts and at a quantity of electricity of 1 coulomb. Thus, a blue paper having the polymer grown in the inside thereof was obtained. The coulomb efficiency of the composite was almost 95% as in Example 1. In this case, the composite was red in an undoped state, and the electric conductivity was 10⁻¹¹ S/cm. Furthermore, doping and undoping were repeatedly applied, and according thereto, the composite could show blue and red.

### EXAMPLE 6

A nesa glass was brought into close contact with an electrical insulating paper having a thickness of 30 µm. The assembly was used as an electrode and immersed in a propylene carbonate solution containing 2 mmole of thiophene and 1 mmole of tetraethylammonium tetrafluoroborate, and electropolymerization was carried out in an argon atmosphere by using a platinum plate as a counter electrode at a constant voltage of 12 volts and at a quantity of electricity of 1 coulomb. Thus, a blue paper having the polymer grown in the inside thereof was obtained. The coulomb efficiency of the composite was 95% as in Example 1. In this case, the composite was red in an undoped state, and the electric conductivity was 10⁻¹¹ S/cm. Furthermore, doping and undoping were repeatedly applied, and according thereto, the composite could show blue and red.

### EXAMPLE 7

An electrical insulating paper having a thickness of 30 µm was vapor deposited with gold, and after connecting thereto a leading wire, the vapor deposited portion was fixedly covered with an epoxy resin to electrically insulate the portion. An electrode thus prepared was immersed in a propylene carbonate solution containing 2 mmole of pyrrole and 1 mmole of tetraethylammonium tetrafluoroborate, and electropolymerization was carried out in an argon atmosphere by using a platinum plate as a counter electrode at a constant voltage of 1.5 volts and at a quantity of electricity of 1 coulomb. In this case, the polymer grew in the inside of the paper. The coulomb efficiency of the composite was 95% as in example 1, which showed excellent electric conducting property.

### EXAMPLE 8

A nesa glass was brought into close contact with an electrical insulating paper having a thickness of 30 µm. The assembly was used as an electrode and immersed in an aqueous solution containing 2 mmole of pyrrole and 3 mmole of p-toluenesulfonic acid, and electropolymerization was carried out in an argon atmosphere by using a nesa glass as a counter electrode at a constant voltage of 2.0 volts and at a quantity of electricity of 1 coulomb. In this case, the polymer grew in the inside of the paper. The coulomb efficiency of the composite was 95% as in Example 1, which showed excellent electric conducting property.

## Claims

1. A process for producing a composite comprising a paper and a conjugated electroconducting polymer, said conjugated electroconducting polymer existing between fibers or in close contact with fibers of the paper, which comprises subjecting a conjugated compound to electropolymerization in the presence of a paper.

2. A process as in claim 1, wherein said conjugated compound is at least one member selected from the group consisting of benzene and derivatives thereof, condensed polycyclic compounds and derivatives thereof and heterocyclic aromatic compounds and derivatives thereof.

3. A process as in claim 2, wherein said benzene and derivatives thereof are selected from aniline and derivatives thereof.

4. A process as in claim 2, wherein said heterocyclic aromatic compounds and derivatives thereof are selected from pyrrole, thiophene and substituted compounds thereof.

## Patentansprüche

1. Verfahren zur Herstellung eines Komposits, der ein Papier und ein konjugiertes elektroleitfähiges Polymeres umfaßt, wobei das konjugierte elektroleitfähige Polymere zwischen den Fasern oder in engen Kontakt mit den Fasern des Papiers vorhanden ist, dadurch gekennzeichnet, daß in dem Verfahren eine konjugierte Verbindung einer Elektropolymerisation in Gegenwart eines Papiers unterworfen wird.

2. Verfahren nach Anspruch 1, worin die konjugierte Verbindung wenigstens eine solche ist, die aus der Gruppe ausgewählt wird, die aus Benzen und Derivaten davon, kondensierten polycyclischen Verbindungen und Derivaten davon und heterocyclischen aromatischen Verbindungen und Derivaten davon besteht.

3. Verfahren nach Anspruch 2, worin das Benzen und dessen Derivate ausgewählt sind unter Anilin und Derivate davon.

4. Verfahren nach Anspruch 2, worin die heterocyclischen aromatischen Verbindungen und deren Derivate ausgewählt sind unter Pyrrol, Thiophen und deren substituierten Verbindungen.

## Revendications

1. Procédé pour la production d'un composite constitué par un papier et un polymère électroconducteur conjugué, ledit polymère électroconducteur conjugué existant entre les fibres ou étant en contact étroit avec les fibres du papier, comprenant le traitement d'un composé conjugué par une électropolymérisation en présence d'un papier.

2. Procédé selon la revendication 1, dans lequel ledit composé conjugué est au moins un élément sélectionné dans le groupe constitué par le benzène et ses dérivés, les composés polycycliques condensés et leurs dérivés et les composés aromatiques hétérocycliques et leurs dérivés.

3. Procédé selon la revendication 2, dans lequel le benzène et ses dérivés sont choisis parmi l'aniline et ses dérivés.

4. Procédé selon la revendication 2, dans lequel lesdits composés aromatiques hétérocycliques et leurs dérivés sont sélectionnés parmi le pyrrole, le thiophène et leurs dérivés substitués.
